# EUROPEAN PATENT APPLICATION

(11) **EP 1 762 460 A1**
(43) Date of publication of application: **14.03.2007**
(21) Application number: 06076697.9
(22) Date of filing: 08.09.2006
(51) Int. Cl.: B62B 7/08

(54) **A stroller and an assembly for attaching two parts**

(30) Priority: 13.09.2005 NL 1029951
(71) Applicant: Maxi Miliaan B.V., 5704 RD Helmond (NL)
(72) Inventor: Jacobs, Imre Peter, 3572 ET Utrecht (NL); Schutgens-van Hooff, Mirella Nicolette Maria, 5056 XT Berkel-Enschot (NL)
(74) Representative: Veldman-Dijkers, Cornelia G. C.

(57) **Abstract**

A stroller (1) comprises a collapsible frame, which frame comprises at least two parts that are movable relative to each other, as well as an elastic fixing element (33) that extends through an opening (36) in the first part. The first end of the fixing element is positioned within the first part (3) and is connected thereto, whilst the second end can be detachably attached against spring force (71) to at least one of the parts for detachably interconnecting said parts.

## Description

The invention relates to a stroller comprising a collapsible frame, which frame comprises at least two parts that are movable relative to each other.

The invention also relates to an assembly comprising at least a first and a second part, as well as an elastic fixing element which is attached to the first part with one end, whilst the second end can be detachably attached against spring force to at least one of said parts for detachably interconnecting the parts.

With such a stroller, which is known from European patent application EP-A1-1 466 810, the frame can be folded down from an unfolded position to a collapsed position, and vice versa. Undesirable unfolding of the frame from the collapsed position to the unfolded position is prevented by means of locking mechanisms that are known per se. Such a known locking mechanism is a clamp of plastic material, for example, which clamp is attached to a first part, for example a tube of the frame, with one end whilst the second end of the clamp can be detachably attached to a second part, for example another tube of the frame. Such a clamp mars the appearance of the stroller, however. In addition, such a projecting clamp is vulnerable and is easily damaged.

It is therefore an object of the invention to provide a stroller wherein two parts can be fixed in a desired position relative to each other in a simple manner.

This object is achieved with the stroller according to the invention in that the stroller is provided with an elastic fixing element which extends through an opening in the first part, wherein the first end of the fixing element is positioned within the first part and is connected thereto, whilst the second end can be detachably attached against spring force to at least one of the parts for detachably interconnecting said parts.

Since the elastic fixing element is at least partially positioned within the first part, the fixing element is at least partially hidden from view in the situation in which the parts are not interconnected. To interconnect the parts, the second end is moved away from the first end against the spring force of the elastic fixing element, after which the second end is either attached to the second part or passed over said second part and subsequently attached to the first part again. The term elastic element as used herein is understood to mean an element that can be elastically deformed under the influence of spring force, causing the element to extend.

An embodiment of the stroller according to the invention is characterised in that at least the first part comprises a tubular section.

An elastic fixing element can be fitted in a tubular section in a simple manner, with the first end being provided in the tubular section. In said tubular section, the opening through which the fixing element extends can be formed.

Another embodiment of the stroller according to the invention is characterised in that the fixing element is positioned substantially entirely within the first part in a position in which the parts are not interconnected by means of the fixing element, whilst the second end is positioned outside said first part.

Since the fixing element is positioned substantially entirely within the first part, the fixing element is substantially completely hidden from view, so that the appearance of the stroller is not marred by the fixing element. In addition, the fixing element is thus protected from damage by the first part. Furthermore, the fixing element is thus prevented from undesirably getting entangled or being used as a toy.

Yet another embodiment of the stroller according to the invention is characterised in that the fixing element comprises an elastic element as well as a cord connected to the elastic element, wherein, in the situation in which the parts are interconnected, the elastic element is positioned within the first part, whilst the cord extends through the opening.

Since the elastic element is positioned within the first part, the elasticity of the elastic element is not affected by negative influences from outside, such as sunlight, moisture, etc. In addition, the maximum extensibility of the fixing element can be limited in a simple manner by using a combination of a substantially non-elastic cord and an elastic element, so that the frame cannot unfold undesirably against the spring force of the fixing element.

Yet another embodiment of a stroller according to the invention is characterised in that the second end is provided with a hook-shaped element.

Using such a hook-shaped element, the second end can be attached to one of the parts in a simple manner.

The hook-shaped element preferably mates with an element provided on one of the parts, such as an eye or a catch, for example.

Another object of the invention is to provide an assembly by means of which two parts can be interconnected in a simple manner.

With the assembly according to the invention, this object is accomplished in that the fixing element extends through an opening in the first part, with the first end of the fixing element being positioned within the first part.

Since the fixing element is at least partially positioned within the first part, the fixing element is at least partially hidden from view, so that the appearance of the assembly is substantially unmarred by the fixing element.

It is noted that elastic fixing elements are known per se, but that such elastic fixing elements are exposed to view both in the connected condition and in the unconnected condition of the parts and thus adversely affect the appearance of the assembly. In addition, there is a risk of the fixing element undesirably catching on other parts of the assembly or on parts outside said assembly.

The invention will now be explained in more detail with reference to the drawings, in which:
Figures 1A and 1B are a perspective view and a side view of an embodiment of a stroller according to the invention in unfolded position;
Figures 2A-2B are a perspective view and a side view, respectively, of the stroller that is shown in figures 1A-1B in unfolded position, without a child's seat;
Figures 3A-6A and 3B-6B are perspective views and side views, respectively, of the stroller that is shown in figures 2A-2B, in which the stroller is shown in increasingly collapsed positions;
Figure 7 shows the unfolded stroller that is shown in figures 1A-1B, in which a fixing element according to the invention is positioned substantially entirely within the first part;
Figure 8 shows the stroller of figure 7 in unfolded position, in which the fixing element is attached to another part;
Figures 9A-9D show various embodiments of a fixing element according to the invention.

Like parts are indicated by the same numerals in the figures.

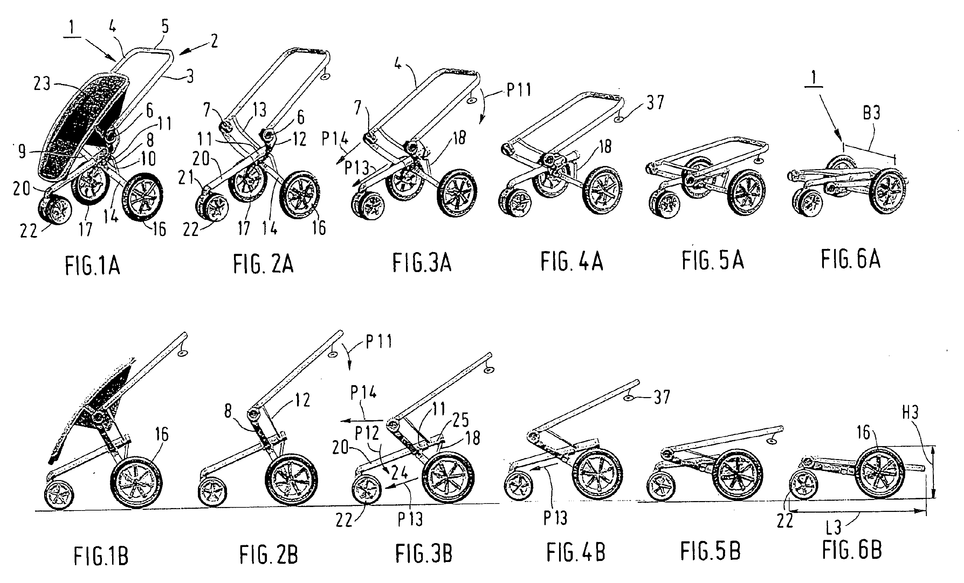

Figures 1A-6B show an embodiment of a stroller 1 according to the invention, which is provided with a U-shaped bracket 2 comprising two pusher rods 3, 4 that extend parallel to each other as well as a handlebar 5 that interconnects the pusher rods 3, 4. The pusher rods 3, 4 are pivotally connected on a side remote from the handlebar 5 to two J-shaped rods 8, 9 via pivots 6, 7. The J-shaped rods 8, 9 are rigidly connected to the connecting piece 10 on the side remote from the pivots 6, 7. The connecting piece is pivotally connected to a sleeve 11 forming a central portion. Auxiliary rods 12, 13 extend between the pusher rods 3, 4 and the sleeve 11, which auxiliary rods are pivotally connected both to the pusher rods 3, 4 and to the sleeve 11. The auxiliary rods 12, 13 extend substantially parallel to the J-shaped rods 8, 9 and form a parallelogram therewith. Furthermore, two wheel supporting rods 14, 15 are rigidly attached to the connecting element 10. On a side remote from the connecting element 10, the wheel supporting rods 14, 15 are provided with rear wheels 16, 17, which are rotatable about a horizontal axis. Auxiliary rods 18, 19 extend between the wheel supporting rods 14, 15 and an end 25 of a rod 20 that is accommodated in the sleeve 20, which auxiliary rods are pivotally connected both to the end 25 and to the wheel supporting rods 14, 15. The rod 20 is slidably accommodated in the sleeve 11. On a side remote from the sleeve 11, the rod 20 is provided with a wheel suspension element 21 and a front wheel 22 pivotally connected thereto. The front wheel 22 is furthermore connected to the element 21, being rotatable about a horizontal axis. The stroller 1 is furthermore provided with a seat 23 for a child, which seat 23 is preferably detachably attached to the stroller 1 near the pivots 6, 7.

The stroller 1 can be folded down from the unfolded position that is shown in figures 1A and 1B to the collapsed position that is shown in figures 6A-6B. If desired, the seat 23 can be removed from the stroller 1 when the stroller is being folded down. It is also possible, however, not to remove the seat 23. To fold down the stroller 1, unlocking devices (not shown) disposed within the pivots 6, 7 are unlocked, after which the pivots 6, 7 are moved forward in the direction indicated by the arrow P14, causing the U-shaped bracket 2 to pivot in the direction indicated by the arrow P11 about the pivots 6, 7. As a result of the parallelogram-shaped arrangement of the rods 8, 12 and 9, 13, respectively, a tilting movement about the axis 24 with respect to the sleeve 11 in the direction indicated by the arrow P12 is imparted to the cross-shaped system of rods formed by the rods 8, 9, 14, 15. Since the wheel supporting rods 14, 15 are connected to the end 25 of the rod 20 via the auxiliary rods 18, 19, the pivoting movement of the system of rods in the direction indicated by the arrow P12 will cause the sleeve 11 to slide over the rod 20 in the direction indicated by the arrow P13, towards the front wheel 22. Thus the stroller 1 will successively take up of the positions shown in figures 3A-3B; figures 4A-4B; figures 5A-5B and finally the position shown in figures 6A-6B. In this position the collapsed stroller 1 has a length L3 that is slightly larger than the distance between the front side of the front wheel 22 and the rear side of the rear wheels 16, a height H3 equal to the diameter of the rear wheel 16 and a width B3 equal to the distance between the rear wheels 16, 17. These are the dimensions that the stroller 1 will have in the situation in which the seat 23 is removed. The dimensions of the collapsed stroller 1 may be slightly larger in the situation in which the seat 23 is not removed. Preferably, a gas spring is disposed in the rod 20 of the stroller 1, which spring is connected to the rod 20, near the element 21, with one end and to the sleeve 11 with another end.

If the pusher rods 3, 4 of the U-shaped bracket 2 are configured as telescopic tubes that can slide one into another, the U-shaped bracket 2 can be telescoped in such that the length L3 equals the distance from the front wheel to the rear wheel in the collapsed position. If the wheels are detachable, the height H3 and the length L3 will be even smaller.

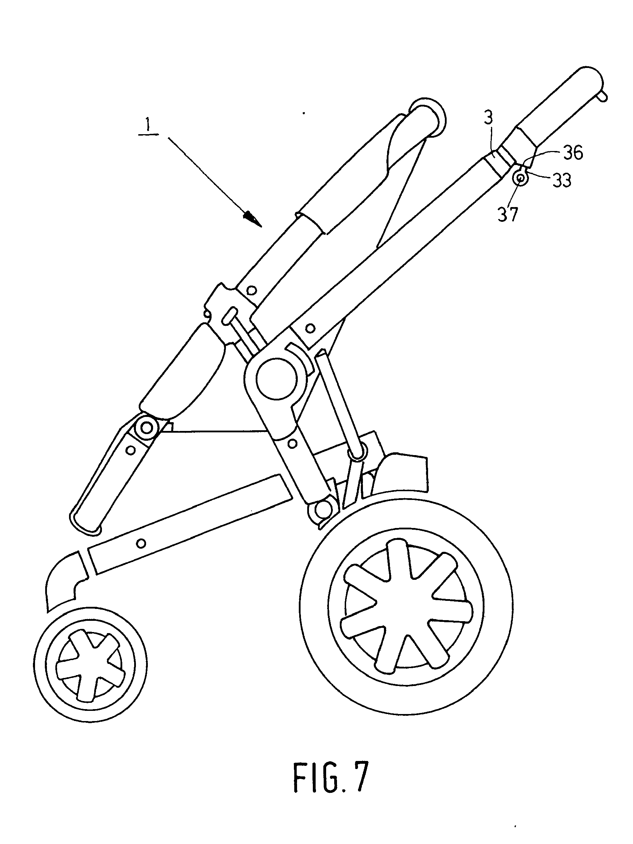

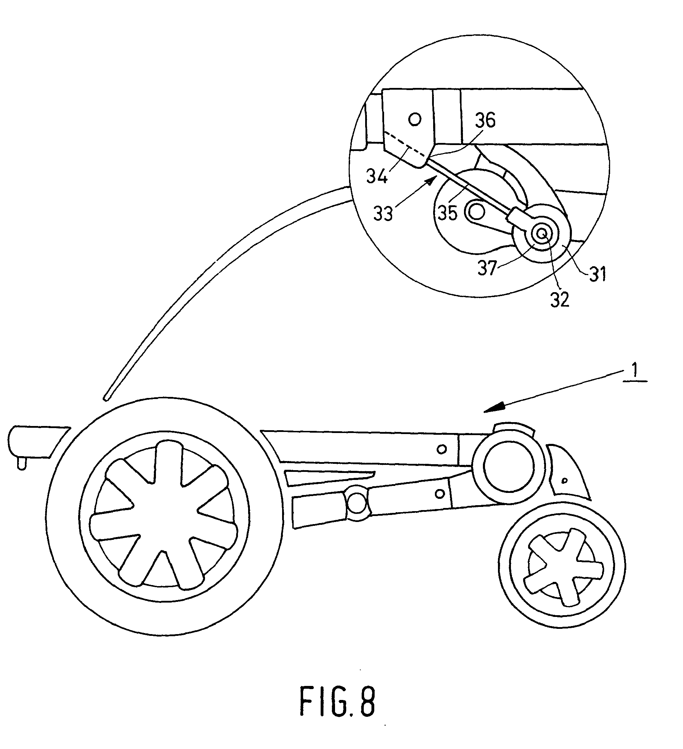

Figures 7 and 8 are views of the stroller 1 in unfolded condition and in collapsed condition as shown in figures 1A-6A and 1B-6B, respectively. Near the reel wheel 16, the stroller 1 is provided with a mushroom-shaped projection 32. The pusher rod 3 is provided with a fixing element 33 positioned within the pusher rod 3, which fixing element comprises an elastic element 34 and a substantially non-elastic cord 35 connected thereto.

The elastic element 33 is attached to the interior of the pusher rod 3 with an end remote from the cord 35. The cord 35 extends through an opening 36 formed in the pusher rod 3 and is provided on a side remote from the elastic element 34 with an eye 37 forming a hook-shaped element.

To prevent the stroller 1 from undesirably moving from the collapsed position that is shown in figures 6A and 6B to the unfolded position that is shown in figures 1A and 1B, the eye 37 is moved against the spring force of the elastic element 34 until the eye 37 can be positioned around the projection 32 (see figure 8), as a result of which the stroller 1 is prevented from taking up the unfolded position in a simple manner. When the stroller 1 is to be unfolded again, the eye 31 is removed from the projection 32 again, after which the eye 31 and the cord 35 are returned to the position that is shown in figure 7 again under the influence of spring force. The fixing element 33 is substantially hidden from view in this position.

Preferably, the elastic element 34 does not extend beyond the opening 36 in the position that is shown in figure 8, either. As a result, the elastic element 34 is not exposed to sunlight or rain. Since the fixing element 33 comprises both an elastic element 34 and a cord 35, the maximum distance over which the cord 35 can be moved out of the opening can be limited in a simple manner. To this end the cord 35 may for example be provided with a locking element disposed within the pusher rod 3, which abuts against the inner side of the opening 36 in the situation that is shown in figure 8. Since the cord 35 is substantially non-elastic, it can thus be ensured in a simple manner that the collapsed position of the stroller 1 that is shown in figures 1A and 1 B will be retained.

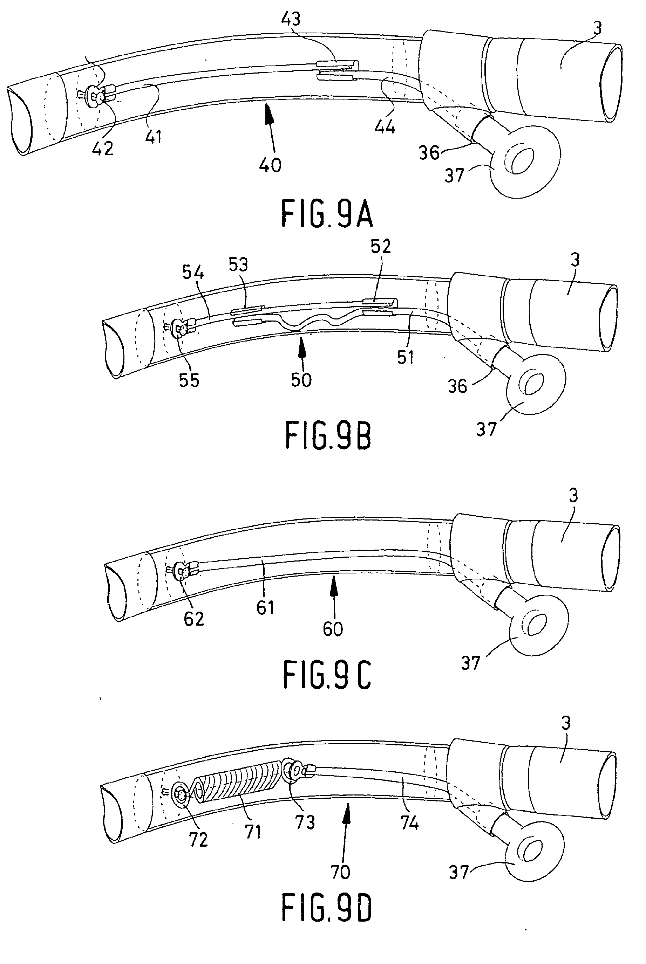

Figures 9A-9D show other embodiments of a fixing element according to the invention.

The fixing element 40 that is shown in figure 9A comprises an elastic cord 41 which is connected to the pusher rod 3 by means of pop rivet 42 at one end and which is connected to a flexible but non-extensible cord 44, via a connecting piece 43, at a second end. The cord 44 is provided with an eye 37 at another end. The cord 44 extends through an opening 36 in the pusher rod 3. The connecting piece 43 is so dimensioned that it cannot move through the opening 36, so that the extent to which the cord 44 can move out of the pusher rod 3 is limited in a simple manner.

Figure 9B shows another embodiment of a fixing element 50, in which a non-extensible cord 51 is connected to an elastically extensible cord 54 via two connecting pieces 52, 53. The elastically extensible cord 54 is connected to the pusher rod 3 with one end. On a side remote from the end 55, the cord 51 is provided with an eye 37 that is positioned outside the tube 3. In the situation that is shown in figure 9B, the length of the cord 51 between the connecting pieces 52 and 53 is greater than the length of the cord 54. When the eye 37 is moved away from the pusher rod 3, the length of the cord 54 between the connecting pieces 52, 53 will increase until it is equal to the length of the cord 51.

Figure 9C shows yet another embodiment of a fixing element 60 according to the invention, which comprises an elastic cord 61 which is connected to the pusher rod 3 with an end 62 and which is provided on a side remote from the end 62 with an eye 37 positioned outside the pusher rod 3.

Figure 9D shows an embodiment of a fixing element 70 according to the invention, which comprises a metal spring 71 positioned within the pusher rod 3, which spring is connected to the pusher rod with one end 72 and which is connected to a deformable but non-extensible cord 74 with another end 73. At an end remote from the spring 71, the cord 74 is provided with an eye 37 positioned outside the pusher rod 3.

Instead of using an eye 37 that can be positioned over a projection 32, it is also possible to use a hook attached to the cord 35, which can be brought into engagement with an opening formed in the wheel 16 for that purpose.

It is also possible to pass the cord 35 over the wheel 16 or over other rods of the stroller 1 and subsequently attach it to the pusher rod 3 again.

It is also possible to use a fixing element 33 when connecting a shopping basket or the like to the stroller 1, for example, which fixing element 33 is placed back into a part of the stroller 1, for example a tube thereof, again after removal of the shopping basket or the like.

It is also possible to use the elastic fixing element for connecting two other parts, for example connecting a stroller to the luggage carrier of a bicycle, holding movable or adjustable parts such as footrests, sunshades, legrests, supports, etc, in place relative to each other.

It is also possible to provide a fixing element near both wheels.

Instead of using a tube, it is also possible to use a tubular section within which the fixing element is positioned.

## Claims

1. A stroller comprising a collapsible frame, which frame comprises at least two parts that are movable relative to each other, **characterised in that** the stroller is provided with an elastic fixing element which extends through an opening in the first part, wherein the first end of the fixing element is positioned within the first part and is connected thereto, whilst the second end can be detachably attached against spring force to at least one of the parts for detachably interconnecting said parts.

2. A stroller according to claim 1, **characterised in that** at least the first part comprises a tubular section.

3. A stroller according to claim 1 or 2, **characterised in that** the fixing element is positioned substantially entirely within the first part in a position in which the parts are not interconnected by means of the fixing element, whilst the second end is positioned outside said first part.

4. A stroller according to any one of the preceding claims 1-3, **characterised in that** the fixing element comprises an elastic element as well as a cord connected to the elastic element, wherein, in the situation in which the parts are interconnected, the elastic element is positioned within the first part, whilst the cord extends through the opening.

5. A stroller according to any one of the preceding claims 1-4, **characterised in that** the second end is provided with a hook-shaped element.

6. A stroller according to claims 1-5, **characterised in that** said second part is provided with an element that mates with said hook-shaped element.

7. An assembly comprising at least a first and a second part, as well as an elastic fixing element which is attached to the first part with one end, whilst the second end can be detachably attached against spring force to at least one of said parts for detachably interconnecting the parts, **characterised in that** the fixing element extends through an opening in the first part, with the first end of the fixing element being positioned within the first part.

8. An assembly according to claim 7, **characterised in that** the fixing element is positioned substantially entirely within the first part in a position in which the parts are not interconnected by means of the fixing element, whilst the second end is positioned outside said first part.

9. An assembly according to claim 7 or 8, **characterised in that** the fixing element comprises an elastic element as well as a cord connected to the elastic element, wherein, in the situation in which the parts are interconnected, the elastic element is positioned within the first part, whilst the cord extends through the opening.

10. An assembly according to any one of the preceding claims 7-9, **characterised in that** the cord is provided with a hook-shaped element on a side remote from the elastic element.
